# EUROPEAN PATENT SPECIFICATION

(11) **EP 1 369 034 B1**
(45) Date of publication and mention of the grant of the patent: **10.08.2005**
(21) Application number: 03075937.7
(22) Date of filing: 01.04.2003
(51) Int. Cl.: A01K 1/12, A01J 9/04, A01J 9/00

(54) **A device for automatically milking animals**
Vorrichtung zum automatischen Melken von Tieren
Dispositif pour traire automatiquement les animaux

(30) Priority: 06.06.2002 NL 1020787
(43) Date of publication of application: 10.12.2003
(73) Proprietor: Lely Enterprises AG, 6300 ZUG (CH)
(72) Inventor: van Leeuwen, Marcel, 2676 BJ Maasdijk (NL); van der Lely, Alexander, 3065 NA Rotterdam (NL)
(74) Representative: Corten, Maurice Jean F.M.

(56) References cited:
- EP-A- 0 604 308
- EP-A- 0 744 584
- GB-A- 2 136 102
- US-A- 4 013 043
- US-A- 4 351 271
- US-A- 6 038 030

## Description

The invention relates to a device for automatically milking dairy animals according to the preamble of claim 1.

Such a device is known. European patent application EP0797915-A2 describes a device for automatically milking animals. By means of a milking robot teat cups can automatically be connected to the teats of a cow. The teat cups are connected to a first milk-collecting vessel. Said milk-collecting vessel has a vacuum connection to a vacuum pump for the purpose of bringing the milk-collecting vessel under vacuum. The vacuum ensures the conveyance to the milk-collecting vessel of a milk-air mixture that is generated in the teat cups. Via a connection in the lower part of the milk-collecting vessel, said milk-collecting vessel is connected to a second milk-collecting vessel. From the second milk-collecting vessel the milk can be conveyed to a milk-cooling tank for cooled storage. The milk is stored temporarily in the second milk-collecting vessel if the milk-cooling tank is not available. Between the first and the second milk-collecting vessel there is further provided a vacuum connection for enabling milk to flow from the first to the second milk-collecting vessel. The second milk-collecting vessel may be designed as a pre-cooling device, so that milk has already been cooled prior to being passed into the milk-cooling tank.

Although said device functions properly, there are required many lines and accessories for performing a milk-air separation and for pre-cooling the milk. As a result thereof said device is relatively expensive and requires relatively much maintenance. When the milk is not cooled immediately after having left the teat cups, there might be bacterial growth in the milk and on the lines.

The invention aims at providing an alternative device for automatically milking animals and pre-cooling milk.

According to the invention, for this purpose a device of the above-described type is characterized by the features of claim 1. The cooling surface of the milk-collecting vessel has the function of pre-cooling the milk. Via the vacuum connection of the milk-collecting vessel, the air is removed from the milk-air mixture coming from the teat cups. The functions of pre-cooling and air-separation are integrated in one element. The device comprises a connection-device-coding device for cooling milk to be passed through the milk connection device. By means of the connection device-cooling device, the milk can be cooled immediately after having left the teat cups, which limits bacterial growth in the milk and on the lines. By using cooling medium from the milk-collecting vessel for this cooling, a minimum amount of lines will suffice.

According to the invention, the connection-device-cooling device is disposed on the robot arm. In this way no extra movable carrier construction for said cooling device is required.

According to the invention, there is provided a line for connecting the vessel-cooling device to the connection-device-cooling device. In this way both cooling devices can be cooled with the same cooling medium.

According to an advantageous embodiment of the invention, the cooling medium side constitutes part of the wall of a cooling medium space for containing the cooling medium. As a result thereof, in the region where the heat transfer to the cooling medium takes place, i.e. at the cooling medium side, a large amount of cold cooling medium is available. This ensures a buffering action for the heat transfer.

In a further embodiment according to the invention, there are disposed moving means for moving the cooling medium in the cooling medium space. In this way there can take place a better heat transfer from the wall of the cooling medium space to the cooling medium.

In another embodiment, the cooling medium space comprises a cooling medium inlet and a cooling medium outlet for the cooling medium. In this way it is possible to dispose a cooling device at some distance, and to pass via lines cold cooling medium to and warm cooling medium from the milk-collecting vessel. As a result thereof the milk-collecting vessel itself can be maintained simple and compact.

In an advantageous embodiment of the invention, the device comprises a drinking trough for watering an animal and the cooling medium outlet is connected via a line to the drinking trough. By using cold drinking-water as cooling medium, the warmed up drinking-water can be supplied on the spot to an animal located in or near the device. In this way the warmed up cooling medium can be re-used in a simple manner.

In a particular embodiment, the device comprises means for using ice water as cooling medium. If ice water is used as cooling medium, freezing of milk in the milk-collecting vessel is impossible. Furthermore, the occurrence of dangerous situations in the case of leakage is excluded, because ice water is harmless to human beings and animals.

In another embodiment, the milk-collecting vessel comprises a vacuum regulator for regulating the vacuum in the milk-collecting vessel. By means of this the milking vacuum can be regulated near the place where the milking process takes place, i.e. the milk-collecting vessel.

In a particular embodiment, the wall of the milk-collecting vessel comprises the cooling surface. In general, the contact surface with the milk has to be as small as possible for enabling a simple cleaning and for minimising the risk of contamination. By means of this embodiment, a largest possible part of the contact surface is used for cooling, so that the total contact surface is maintained small.

In a further embodiment, the milk inlet is disposed at the upper side of the milk-collecting vessel. In this way the milk inlet is always located above the milk surface, so that flowing back of milk into the supply line is impossible.

In a further embodiment, the cooling surface comprises a spreading surface for spreading the milk to be supplied to the milk-collecting vessel. Via said spreading surface the force of the incoming milk squirt is slowed down.

In an advantageous embodiment according to the invention, the milk inlet, seen in the direction of the gravitational force, is located above the spreading surface. In this way the incoming milk will always land on the spreading surface by free fall, irrespective of the speed or the rate of flow of the incoming milk flow.

In another embodiment, the spreading surface makes an angle between 10° and 80° relative to the direction of the gravitational force. Due to such a spreading surface, the incoming milk flow will flow slowly and steadily downwards in a thin layer via the spreading surface. By means of this a great impact of milk is prevented, which is beneficial to the milk quality.

In a further embodiment, the cooling surface comprises at least partially the spreading surface. The milk flowing in a thin and relatively large layer over the spreading surface provides a good heat transfer from the milk to the cooler spreading surface.

In a particular embodiment, the wall of the milk-collecting vessel surrounds at least partially the cooling surface. This enables a simple production of the milk-collecting vessel, because the cooling surface may constitute part of a separate cooling element that can be disposed in the milk-collecting vessel in a late stage of the production process.

In a further embodiment, the cooling surface comprises the surface of a coil cooler. A coil cooler is relatively simple and can relatively easily be cleaned because of its tubular contact surface.

In a variant of the invention, the cooling surface comprises a plate cooler. This enables a large heat transfer over a relatively small volume.

By connecting the connection-device-cooling device to the cooling medium outlet, the warmest cooling medium is used for the first cooling. This is the most favourable procedure to obtain an optimum cooling capacity of the entire device.

By surrounding the milk-collecting vessel by a thermally insulating insulation layer, warming up of the cooling medium by the environment is limited. Besides, the insulation layer also offers advantages upon internally cleaning the device with a warm cleaning agent.

In a further embodiment of the invention, the device is provided with means for automatically emptying the milk-collecting vessel after a dairy animal has been milked, so that the milk-collecting vessel is suitable for containing an amount of milk obtained during only one milking run of the dairy animal. This embodiment makes it possible to take, in a simple manner, a mixture sample of the milk obtained during the milking process. Because this mixture sample is a sample of the total amount of milk in the milk-collecting vessel, it is representative of the milk from the relevant dairy animal.

In a particular embodiment, the device comprises a controlling computer for emitting a destination signal, and the milk outlet is controllable by the destination signal and suitable for guiding milk selectively to several destinations. This embodiment also makes it possible to store the milk obtained during a milking process until the milking process has finished, after which it is possible for the controlling computer to decide afterwards to give the total amount of milk a different destination.

In a particular embodiment, the milk-collecting vessel comprises a volume meter. Said meter provides the possibility of measuring the total amount of milk obtained as an integral whole.

In again another embodiment, the milk-collecting vessel comprises a stirring device for moving milk. By keeping the milk in motion in an active manner, there is created a flow along the cooling surface, so that a good heat transfer is obtained.

The invention will be explained hereinafter in detail with reference to figures of embodiments.
Figure 1 is a side view of a device according to the invention, in which a cow is present;
Figure 2 is a cross-sectional view of a milk-collecting vessel according to the invention, the cooling surface comprising a spreading surface, and
Figure 3 is a cross-sectional view of a milk-collecting vessel according to the invention with a coil cooler.

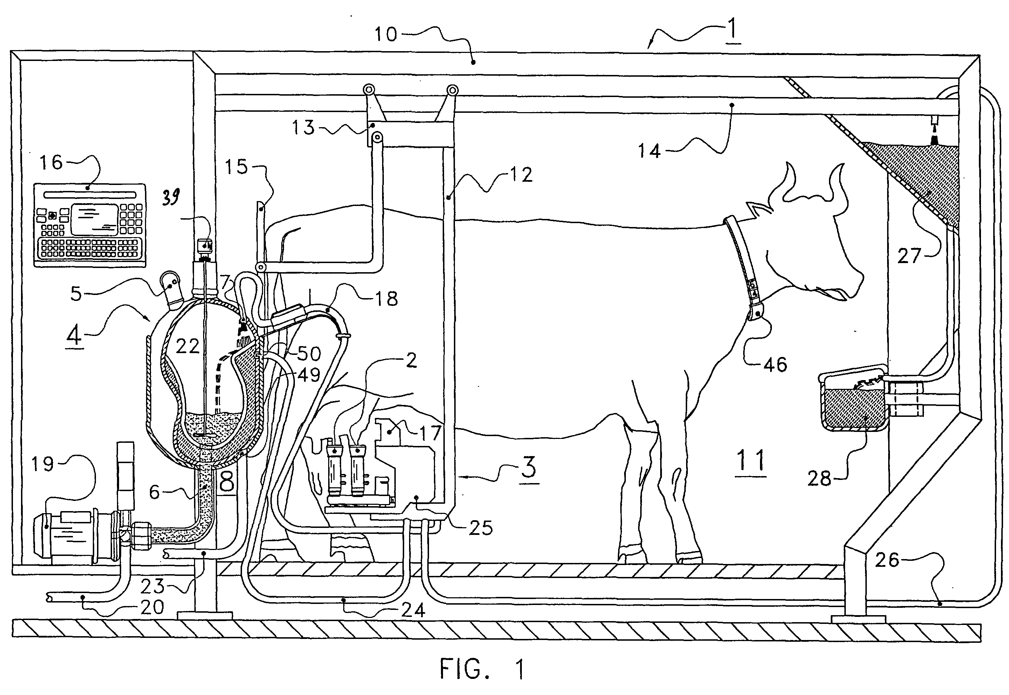

Figure 1 shows a device 1 for automatically milking dairy animals, comprising: teat cups 2 for drawing milk from a dairy animal and for generating a milk-air mixture, a robot arm 3 for automatically connecting the teat cups 2 to the teats of the dairy animal, a milk-collecting vessel 4 provided with a connection 5 connected to a vacuum source and with a milk outlet 6 for discharging the milk to milk-processing means, such as a milk-cooling tank, and with at least one milk inlet 7 for letting the milk-air mixture in, at least one milk connection device 18 between a teat cup 2 and the milk inlet 7 for conveying the milk-air mixture, and a vessel-cooling device 8 for cooling the contents of a milk-collecting vessel 4, which vessel-cooling device 8 comprises a cooling surface 9 having a milk side 47 for contact with the milk and having a cooling medium side 48 for contact with a cooling medium, wherein the device 1 comprises only one milk-collecting vessel 4. The device comprises a box-like frame 10 to which various components are attached. A dairy cow is depicted in the animal area 11 surrounded by the frame 10. There is disposed a robot arm 3 for automatically connecting teat cups 2 to the teats of the cow. The robot arm 3 is connected via a connecting element 12 to a guide element 13. The robot arm 3 is movable in the longitudinal direction of the device 1 over a rail 14. To the guide element 13 there is also connected a device 15 for following the rear of the animal, by means of which the controlling computer 16 of the device 1 can position the robot arm 3 relative to the rear side of the animal. For determining the position of the teats, the robot arm 3 comprises a laser 17. The connection of the teat cups 2 is carried out in a known manner by means of positioning means such as pneumatic cylinders and is controlled by the central controlling computer 16. The milk drawn by the teat cups 2 is passed to the milk inlet 7 via a milk connection device 18 in the form of a milk tube. There is disposed a vacuum connection 5 with a connection to a (non-shown) vacuum source, such as a number of revolutions-controlled vacuum pump, for bringing the milk-collecting vessel 4 under vacuum. Said vacuum connection 5 ensures the removal of air that has come along with the milk from the teat cups 2. In the lower part of the milk-collecting vessel 4 there is disposed a milk outlet 6 that is connected to a milk pump 19. Said milk pump 19 can convey the milk via a pressure line 20 to further processing means. Such a further processing device may be for example a milk-cooling tank for storing milk obtained during some days at a temperature of approximately 4°C. Between the device 1 and the milk-cooling tank there may be arranged a cooled or non-cooled buffer tank for short-term storage of milk, if the milk-cooling tank is not able to receive milk, for example when it is cleaned or emptied. It is advantageous to cool the milk before it gets into the further processing means. Cooling inhibits bacterial growth in the milk and in the milk residues remaining on walls that have been in contact with milk. This is in particular of importance with automatic milking devices, because these devices are in operation during a considerable part of the day and comprise lines and accessories that are, consequently, in contact with milk for the major part of the day. The cooling needs not necessarily to be performed so as to achieve the required storage temperature of 4°C for having a bacteria-inhibiting effect. Besides, previously cooling relieves the cooling system of the milk tank and renders a cooling installation for a buffer tank superfluous. For the purpose of cooling the milk in the milk-collecting vessel 4, there is disposed a vessel-cooling device 8. For the sake of clearness the milk-collecting vessel 4 is shown partially cut-away. The vessel-cooling device 8 comprises a cooling medium space 21 surrounding the milk space 22. Cooling water is supplied to said space from the lower side via a cooling medium supply line 23. The warmed up cooling medium leaves the cooling medium space 21 at the upper side and is passed via a line 24 to a connection-device-cooling device 25. The latter device is located on the robot arm 3. In said device the cooling medium is passed in counterflow along the milk tubes guiding the milk coming from the teat cups 2 to the milk-collecting vessel 4. A further line 26 guides the cooling medium to a cooling-medium-collecting reservoir 27 in the upper part of the device 1. Said cooling-medium-collecting reservoir 27 feeds the drinking trough 28. A non-shown float ensures in a known manner a constant water level in the drinking trough 28. In the cooling-medium-collecting reservoir 27 there is provided an overflow and a float-controlled connection with a drinking-water line to ensure that the water level is maintained between a maximum and a minimum. The cooling medium may also be discharged directly, for example in a dung pit. The latter option has the advantage that a cooling medium flow is possible at all times, irrespective of the drinking-water consumption from the cooling-medium-collecting reservoir 27. The advantage of the drinking trough 28 in the device 1 is that it functions as an extra enticement for the dairy animals. Besides, via the drinking trough 28 it is possible to use the warmed up cooling water in a simple, direct manner.

In a non-shown embodiment, the drinking trough 28 is provided with a controllable cover or can be swung aside as a whole, so that the animal can be prevented from drinking after the milking process. This prevents that the device 1 is unnecessarily occupied.

In a non-shown embodiment, the supply of cooling water can be controlled by the controlling computer 16 via a valve in the cooling medium supply line 23. In this manner flowing of cooling water is only necessary when milking takes place.

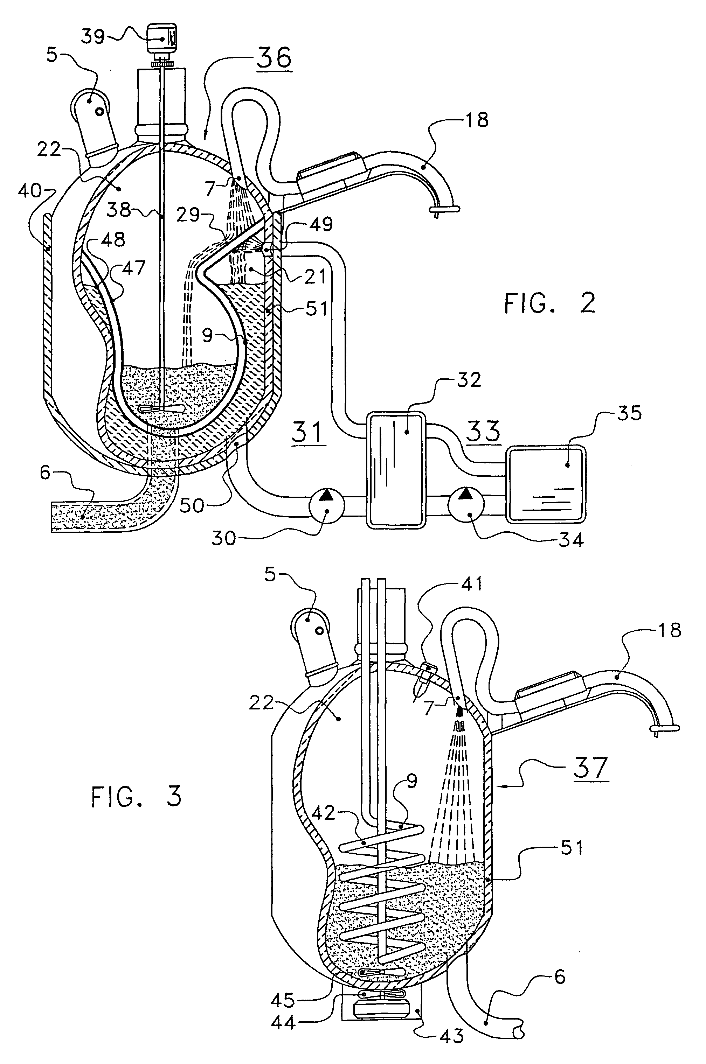

Figure 2 shows a cut-away milk-collecting vessel 36 according to the invention, the milk-collecting vessel 36 comprising a spreading surface 29 for spreading the milk to be supplied to the milk-collecting vessel 36. The milk inlet 7 is located, seen in the direction of the gravitational force, above the spreading surface 29. The spreading surface 29 makes an angle between 10° and 80° relative to the direction of the gravitational force. The milk-air mixture supplied by the milk tube 18 falls onto the spreading surface 29. The milk spreads over said surface and slides downwards along the spreading surface 29. The air is exhausted by the vacuum connection 5. Cold cooling medium is passed against the other side of the spreading surface 29. Due to the fact that the milk flows over the spreading surface 29 in a thin layer, there is a large heat transfer.

As cooling medium for example ice water or salt water may be used. A circulation pump 30 circulates said cooling medium through the cooling medium circuit 31 and causes it to pass along a heat exchanger 32. In the cooling medium circuit 31 there is included a connection-device-cooling device 25, as described in the foregoing. The use of ice water has the advantage that freezing of milk to the cooling surface 9 is impossible. An additional advantage is that the heat exchanger 32 can be used as an extra cold buffer by means of the storage of ice.

The cooling medium itself is recycled by cooling it in a known manner by means of a second cooling circuit 33 in which a compressor 34 and a condenser 35 are included.

The heat exchanger 32 may also be located in the cooling medium space 21. In that case a cooling medium circuit is superfluous.

If there are provided several devices, several milk-collecting vessels may be connected, both in series and in parallel, to the same cooling medium circuit 31. This simplifies the cooling device.

A stirring device 38, driven by a small electric motor 39, ensures a constant movement of the milk along the cooling surface 9. The cooling medium space 21 is surround by an insulation layer 40 for minimising loss of cold towards the outside air.

The vessel-cooling device 8 may also function according to the evaporation principle. In that case the cooling medium is brought, after the condenser 35, directly into the cooling medium space 21 where it evaporates and removes heat from the cooling surface 9.

Figure 3 shows a cut-away milk-collecting vessel 37 according to the invention, the wall 51 of the milk-collecting vessel 37 at least partially surrounding the cooling surface 9. The cooling surface 9 comprises the surface of a coil cooler 42. In this embodiment the cooling medium is passed through the curved tube of the coil cooler 42. The cooling medium may both be recycled according to the cooling device as shown in Figure 2 and be guided to a drinking trough 28 as shown in Figure 1. There is disposed a magnetic stirring device 43 for keeping the milk to be cooled in movement and thus ensuring a better heat transfer. For this purpose a magnet 44 disposed on the axis of an electric motor drives a magnetic stirring bar 45. The motor is disposed outside the milk-collecting vessel 37. Due to the fact that the milk-collecting vessel 37 is non-metallic at its lower side, the stirring bar 45 is taken along by the rotating magnet 44.

As an alternative to a coil cooler 42 a (non-shown) plate cooler may be used. Said plate cooler consists of a number of flat, hollow plates each surrounding a cooling medium space through which the cooling medium is passed. Because the cooling surface is plate-shaped and consequently has a relatively large surface, it has a large cooling capacity.

In the milk-collecting vessel 4, 36, 37 there may be provided a (non-shown) level meter by means of which the amount of milk can be measured. If such a level meter is present, the milk-collecting vessel 4, 36, 37 needs not to have such a size that it is able to contain in all cases the amount of milk from an entire milking run. By switching the milk pump 19 on when a certain level has been attained and by switching it off when a certain lower level has been attained, the level is maintained between two values. The same effect can be obtained by causing the milk pump 19 to function at a variable number of revolutions. The rate of flow of the milk to be pumped away is thus adapted to the amount of milk supplied to the milk-collecting vessel 4, 36, 37 or to the amount of milk present in the milk-collecting vessel 4, 36, 37.

It may be advantageous if the dimensions of the milk-collecting vessel 4, 36, 37 are such that the total amount of milk from one milking run can temporarily be stored therein. Thus the controlling computer 16 has to decide only after a milking run has finished whether the total amount of milk should be given a different destination, for example if the milk does not come up to the consumption standard. This may then take place on the basis of measurement data obtained about all the phases of the milking.

In a non-shown embodiment, the device comprises several storage vessels for milk with a different destination, such as colostrum or milk from sick dairy animals. For this purpose the milk outlet may be connected via valves to a storage vessel. The valves are controllable by the controlling computer. An embodiment in which a hose that is movable by the controlling computer guides the milk to the relevant storage vessel is also possible. Due to the fact that the milk to be separated has already been cooled in the milk-collecting vessel, the storage vessel does not require separate cooling. Besides, the storage vessel does not have to meet special requirements as regards size and shape. A simple bucket will suit.

The pressure in the milk-collecting vessel 4, 36, 37 is in direct relation to the milking vacuum with which the milk is drawn from the animal. In order to maintain a constant pressure, there is disposed a vacuum regulator. In the embodiment shown said vacuum regulator comprises a pressure sensor 41. By means of the data obtained by the pressure sensor 41, a non-shown vacuum pump is controlled. In a non-shown embodiment, for controlling the vacuum, the pressure sensor 41 may control in a known manner an air inlet valve or a throttle valve in the vacuum line to the vacuum pump.

The functioning of the device will be described briefly hereinafter. A cow reports at the device 1 and said animal is identified by means of the responder 46 around its neck. If the computer 16 decides that the animal should be milked, the entrance door of the device is opened and the animal can enter the animal area 11. The robot arm 3 moves to under the udder of the animal, cleans the udder and connects the teat cups 2 one by one, after which the milking is started. If the animal drinks from the drinking trough 28 during milking, the water level in the drinking trough 28 will fall and a float will open a water inlet. The drinking trough 28 is filled from the cooling medium-collecting reservoir 27. During milking there is created in the teat cups 2 a mixture of drawn off milk and air. In the arm, the temperature, conductivity and colour of the milk are measured by sensors. The data are passed to and processed by the controlling computer 16. By means of the milking vacuum the milk-air mixture flows via the connection-device-cooling device 25 to the milk-collecting vessel 4. Here the milk falls to the bottom of the vessel and the air is discharged via the vacuum connection 5 to the vacuum pump. In this embodiment the milk rests in the milk-collecting vessel 4 until the entire milking process has finished. During the duration of the milking, the milk gives out heat to the water in the cooling medium space 21. By means of the pressure in the line 23, cool water is supplied to the cooling medium space 21. At the same time warmed up water is passed via the cooling medium outlet 50 and the connection-device-cooling device 25 to the cooling-medium-collecting reservoir 27. When the level in the cooling-medium-collecting reservoir has attained a certain maximum, the flow of the water will be stopped by a shut-off valve. When the milk flow has come below a certain threshold, the milking process is finished. The teat cups 2 are disconnected, the teats are disinfected and the exit of the device is opened. On the basis of the measurement data the controlling computer 16 decides what destination should be given to the milk. A (non-shown) valve in the vacuum connection is closed and the milk-collecting vessel 4 is aerated. Then the correct valves to the relevant further milk-processing units are opened and the milk pump 19 is started. After the computer 16 has received an empty-report from the milk-collecting vessel 4, the (non-shown) cleaning device is started, which cleaning device cleans the milk-collecting vessel 4 and the further components that have come into contact with milk, including the teat cups 2. If warm water is used for cleaning, before the cleaning process is started, first the cooling medium space 21 and the connection-device-cooling device 25 are made free from cooling water by emptying them by means of compressed air towards the cooling-medium-collecting reservoir 27. This procedure limits the cooling down of the cleaning agent.

## Claims

1. A device (1) for automatically milking dairy animals, comprising:
a teat cup (2) for drawing milk from a dairy animal and for generating a milk-air mixture,
a robot arm (3) for automatically connecting the teat cup (2) to a teat of the dairy animal,
a milk-collecting vessel (4, 36, 37) provided with a vacuum connection (5) connected to a vacuum source, with a milk outlet (6) for discharging the milk to milk-processing means, such as a milk-cooling tank, and with at least one milk inlet (7) for letting the milk-air mixture in,
at least one milk connection device (18) between a teat cup (2) and the milk inlet (7) for conveying the milk-air mixture,
and a vessel-cooling device (8) for cooling the contents of a milk-collecting vessel (4, 36, 37), which vessel-cooling device (8) comprises a cooling surface (9) having a milk side (47) for contact with the milk and having a cooling medium side (48) for contact with a cooling medium, **characterized in that** the device (1) comprises only one milk-collecting vessel (4, 36, 37) and a connection-device-cooling device (25) for cooling milk to be passed through the milk connection device (18), said connection-device-cooling device (25) being disposed on the robot arm (3) and a line (24) for the cooling medium being provided for connecting the vessel-cooling device (8) to the connection-device-cooling device (25).

2. A device (1) as claimed in claim 1, **characterized in that** the cooling medium side (48) constitutes part of the wall of a cooling medium space (21) for containing the cooling medium.

3. A device (1) as claimed in claim 2, **characterized in that** there are disposed moving means (30) for moving the cooling medium in the cooling medium space (21).

4. A device (1) as claimed in claim 2 or 3, **characterized in that** the cooling medium space (21) comprises a cooling medium inlet (49) and a cooling medium outlet (50) for the cooling medium.

5. A device (1) as claimed in claim 4, **characterized in that** the device (1) comprises a drinking trough (28) for watering an animal, and **in that** the cooling medium outlet (50) is connected via a line (24, 26) to the drinking trough (28).

6. A device (1) as claimed in any one of the preceding claims, **characterized in that** the device comprises means for using ice water as cooling medium.

7. A device (1) as claimed in any one of the preceding claims, **characterized in that** the device comprises a vacuum regulator for regulating the vacuum in the milk-collecting vessel (4, 36, 37).

8. A device (1) as claimed in any one of the preceding claims, **characterized in that** the wall (51) of the milk-collecting vessel (4, 36, 37) comprises the cooling surface (9).

9. A device (1) as claimed in any one of the preceding claims, **characterized in that** the milk inlet (7) is disposed at the upper side of the milk-collecting vessel (4, 36, 37).

10. A device (1) as claimed in any one of the preceding claims, **characterized in that** the milk-collecting vessel (4, 36) comprises a spreading surface (29) for spreading the milk to be supplied to the milk-collecting vessel (4, 36).

11. A device (1) as claimed in claim 10, **characterized in that** the milk inlet (7), seen in the direction of the gravitational force, is located above the spreading surface (29).

12. A device (1) as claimed in claim 10 or 11, **characterized in that** the spreading surface (29) makes an angle between 10° and 80° relative to the direction of the gravitational force.

13. A device (1) as claimed in any one of claims 10 to 12, **characterized in that** the cooling surface (9) comprises at least partially the spreading surface (29).

14. A device (1) as claimed in any one of claims 1 to 7, **characterized in that** the wall (51) of the milk-collecting vessel (4, 36, 37) surrounds at least partially the cooling surface (9).

15. A device (1) as claimed in any one of the preceding claims, **characterized in that** the vessel-cooling device (8) comprises a coil cooler (42).

16. A device (1) as claimed in any one of the preceding claims, **characterized in that** the vessel-cooling device (8) comprises a plate cooler.

17. A device (1) as claimed in claims 16 and 4, **characterized in that** the connection-device-cooling device (25) is connected to the cooling medium outlet (50).

18. A device (1) as claimed in any one of the preceding claims, **characterized in that** the milk-collecting vessel (4, 36, 37) is surrounded by a thermally insulating insulation layer (40).

19. A device (1) as claimed in any one of the preceding claims, **characterized in that** the device (1) is provided with means for automatically emptying the milk-collecting vessel (4, 36, 37) after a dairy animal has been milked, so that the milk-collecting vessel (4, 36, 37) is suitable for containing an amount of milk obtained during only one milking run of the dairy animal.

20. A device (1) as claimed in any one of the preceding claims, **characterized in that** the device (1) comprises a controlling computer (16) for emitting a destination signal, and **in that** the milk outlet (6) is controllable by the destination signal and is suitable for guiding milk selectively to several destinations.

21. A device (1) as claimed in any one of the preceding claims, **characterized in that** the milk-collecting vessel (4, 36, 37) comprises a volume meter.

22. A device (1) as claimed in any one of the preceding claims, **characterized in that** the milk-collecting vessel (4, 36, 37) comprises a stirring device (38, 45) for moving milk.

## Patentansprüche

1. Vorrichtung (1) zum automatischen Melken von milchgebenden Tieren mit folgenden Bauteilen:
- einem Zitzenbecher (2) zur Gewinnung von Milch von einem milchgebenden Tier und zur Erzeugung eines Milch-Luft-Gemisches,
- einem Roboterarm (3) zum automatischen Anschließen des Zitzenbechers (2) an eine Zitze des milchgebenden Tieres,
- einem Milchaufnahmebehälter (4, 36, 37), der mit einer an eine Vakuumquelle angeschlossenen Vakuumverbindung (5), mit einem Milchauslaß (6) zum Ableiten der Milch in eine Milchverarbeitungsvorrichtung, wie z. B. einen Milchkühltank, und mit mindestens einem Milcheinlaß (7) zum Einlassen des Milch-Luft-Gemisches versehen ist,
- mindestens einer Milchverbindungsvorrichtung (18) zwischen einem Zitzenbecher (2) und dem Milcheinlaß (7) zur Beförderung des Milch-Luft-Gemisches,
- und einer Behälterkühlvorrichtung (8) zum Kühlen des Inhalts eines Milchaufnahmebehälters (4, 36, 37), wobei die Behälterkühlvorrichtung (8) eine Kühlfläche (9) umfaßt, die eine Milchseite (47) zum Kontakt mit der Milch und eine Kühlmittelseite (48) zum Kontakt mit einem Kühlmittel aufweist,
**dadurch gekennzeichnet, daß** die Vorrichtung (1) lediglich einen Milchaufnahmebehälter (4, 36, 37) und eine Verbindungsvorrichtungs-Kühlvorrichtung (25) zum Kühlen von durch die Milchverbindungsvorrichtung (18) zu leitender Milch umfaßt, wobei die Verbindungsvorrichtungs-Kühlvorrichtung (25) an dem Roboterarm (3) angeordnet ist und eine Leitung (24) für das Kühlmittel vorhanden ist, um die Behälterkühlvorrichtung (8) mit der Verbindungsvorrichtungs-Kühlvorrichtung (25) zu verbinden.

2. Vorrichtung (1) nach Anspruch 1,
**dadurch gekennzeichnet, daß** die Kühlmittelseite (48) einen Teil der Wand eines Kühlmittelraumes (21) zur Aufnahme des Kühlmittels bildet.

3. Vorrichtung (1) nach Anspruch 2,
**dadurch gekennzeichnet, daß** eine Bewegungsvorrichtung (30) zum Bewegen des Kühlmittels in dem Kühlmittelraum (21) vorhanden ist.

4. Vorrichtung (1) nach Anspruch 2 oder 3,
**dadurch gekennzeichnet, daß** der Kühlmittelraum (21) einen Kühlmitteleinlaß (49) und einen Kühlmittelauslaß (50) für das Kühlmittel umfaßt.

5. Vorrichtung (1) nach Anspruch 4,
**dadurch gekennzeichnet, daß** die Vorrichtung (1) ein Tränkbecken (28) zum Tränken eines Tieres umfaßt, und daß der Kühlmittelauslaß (50) über eine Leitung (24, 26) mit dem Tränkbecken (28) verbunden ist.

6. Vorrichtung (1) nach einem der vorhergehenden Ansprüche,
**dadurch gekennzeichnet, daß** die Vorrichtung eine Vorrichtung zur Verwendung von Eiswasser als Kühlmittel umfaßt.

7. Vorrichtung (1) nach einem der vorhergehenden Ansprüche,
**dadurch gekennzeichnet, daß** die Vorrichtung einen Vakuumregler zum Regeln des Vakuums in dem Milchaufnahmebehälter (4, 36, 37) umfaßt.

8. Vorrichtung (1) nach einem der vorhergehenden Ansprüche,
**dadurch gekennzeichnet, daß** die Wand (51) des Milchaufnahmebehälters (4, 36, 37) die Kühlfläche (9) umfaßt.

9. Vorrichtung (1) nach einem der vorhergehenden Ansprüche,
**dadurch gekennzeichnet, daß** der Milcheinlaß (7) an der Oberseite des Milchaufnahmebehälters (4, 36, 37) angeordnet ist.

10. Vorrichtung (1) nach einem der vorhergehenden Ansprüche,
**dadurch gekennzeichnet, daß** der Milchaufnahmebehälter (4, 36) eine Verteilfläche (29) zum Verteilen der dem Milchaufnahmebehälter (4, 36) zuzuführenden Milch umfaßt.

11. Vorrichtung (1) nach Anspruch 10,
**dadurch gekennzeichnet, daß** der Milcheinlaß (7) in Wirkrichtung der Schwerkraft betrachtet über der Verteilfläche (29) angeordnet ist.

12. Vorrichtung (1) nach Anspruch 10 oder 11,
**dadurch gekennzeichnet, daß** die Verteilfläche (29) relativ zu der Wirkrichtung der Schwerkraft in einem Winkel zwischen 10° und 80° angeordnet ist.

13. Vorrichtung (1) nach einem der Ansprüche 10 bis 12,
**dadurch gekennzeichnet, daß** die Kühlfläche (9) die Verteilfläche (29) zumindest teilweise umfaßt.

14. Vorrichtung (1) nach einem der Ansprüche 1 bis 7,
**dadurch gekennzeichnet, daß** die Wand (51) des Milchaufnahmebehälters (4, 36, 37) die Kühlfläche (9) zumindest teilweise umgibt.

15. Vorrichtung (1) nach einem der vorhergehenden Ansprüche,
**dadurch gekennzeichnet, daß** die Behälterkühlvorrichtung (8) einen Ringkühler (42) umfaßt.

16. Vorrichtung (1) nach einem der vorhergehenden Ansprüche,
**dadurch gekennzeichnet, daß** die Behälterkühlvorrichtung (8) einen Plattenkühler umfaßt.

17. Vorrichtung (1) nach den Ansprüche 16 und 4,
**dadurch gekennzeichnet, daß** die Verbindungsvorrichtungs-Kühlvorrichtung (25) mit dem Kühlmittelauslaß (50) verbunden ist.

18. Vorrichtung (1) nach einem der vorhergehenden Ansprüche,
**dadurch gekennzeichnet, daß** der Milchaufnahmebehälter (4, 36, 37) von einer wärmeisolierenden Isolierschicht (40) umgeben ist.

19. Vorrichtung (1) nach einem der vorhergehenden Ansprüche,
**dadurch gekennzeichnet, daß** die Vorrichtung (1) mit einer Vorrichtung versehen ist, um den Milchaufnahmebehälter (4, 36, 37) automatisch zu leeren, nachdem ein milchgebendes Tier gemolken worden ist, so daß der Milchaufnahmebehälter (4, 36, 37) zur Aufnahme einer Milchmenge geeignet ist, die bei nur einem Melkvorgang des milchgebenden Tieres gewonnen wurde.

20. Vorrichtung (1) nach einem der vorhergehenden Ansprüche,
**dadurch gekennzeichnet, daß** die Vorrichtung (1) einen Steuercomputer (16) zur Ausgabe eines Bestimmungsort-Signals umfaßt, und daß der Milchauslaß (6) von dem Bestimmungsort-Signal steuerbar und dazu ausgebildet ist, Milch wahlweise zu mehreren Bestimmungsorten zu leiten.

21. Vorrichtung (1) nach einem der vorhergehenden Ansprüche,
**dadurch gekennzeichnet, daß** der Milchaufnahmebehälter (4, 36, 37) einen Mengenmesser umfaßt.

22. Vorrichtung (1) nach einem der vorhergehenden Ansprüche,
**dadurch gekennzeichnet, daß** der Milchaufnahmebehälter (4, 36, 37) eine Rührvorrichtung (38, 45) zum Bewegen von Milch umfaßt.

## Revendications

1. Dispositif (1) pour la traite automatique d'animaux laitiers, comprenant :
un gobelet trayeur (2) afin de prélever le lait chez un animal laitier et de générer un mélange de lait et d'air,
un bras robotisé (3) pour relier automatiquement le gobelet trayeur (2) à un trayon de l'animal laitier,
une cuve pour collecte du lait (4, 36, 37) dotée d'un raccord à vide (5) raccordé à une source de vide, avec une évacuation pour le lait (6) afin de décharger le lait vers des moyens de traitement du lait, comme une cuve de réfrigération du lait, et avec au moins une admission pour le lait (7) afin de laisser entrer le mélange de lait et d'air,
au moins un dispositif de raccordement pour le lait (18) entre un gobelet trayeur (2) et l'admission pour le lait (7) afin de transporter le mélange de lait et d'air,
et un dispositif de réfrigération de la cuve (8) pour réfrigérer le contenu d'une cuve pour collecte du lait (4, 36, 37), lequel dispositif de réfrigération de la cuve (8) comprend une surface réfrigérante (9) ayant un côté tourné vers le lait (47) pour venir en contact avec le lait et ayant un côté tourné vers l'agent de réfrigération (48) pour venir en contact avec un agent de réfrigération, **caractérisé en ce que** le dispositif (1) ne comprend qu'une seule cuve pour collecte du lait (4, 36, 37) et un dispositif de réfrigération (25) du dispositif de raccordement pour réfrigérer le lait qui doit passer dans le dispositif de raccordement pour le lait (18), ledit dispositif de réfrigération (25) du dispositif de raccordement étant disposé sur le bras robotisé (3) et un conduit (24) pour l'agent de réfrigération étant prévu pour raccorder le dispositif de réfrigération de la cuve (8) au dispositif de réfrigération (25) du dispositif de raccordement.

2. Dispositif (1) selon la revendication 1, **caractérisé en ce que** le côté tourné vers l'agent de réfrigération (48) constitue une partie de la paroi d'un espace (21) pour l'agent de réfrigération afin de contenir l'agent de réfrigération.

3. Dispositif (1) selon la revendication 2, **caractérisé en ce qu'**il y a des moyens de déplacement disposés (30) pour déplacer l'agent de réfrigération dans l'espace (21) pour l'agent de réfrigération.

4. Dispositif (1) selon la revendication 2 ou la revendication 3, **caractérisé en ce que** l'espace (21) pour l'agent de réfrigération comprend une admission (49) pour l'agent de réfrigération et une évacuation (50) pour l'agent de réfrigération.

5. Dispositif (1) selon la revendication 4, **caractérisé en ce que** le dispositif (1) comprend un abreuvoir (28) pour faire boire un animal, et **en ce que** l'évacuation (50) pour l'agent de réfrigération est raccordée par l'intermédiaire d'un conduit (24, 26) à l'abreuvoir (28).

6. Dispositif (1) selon l'une quelconque des revendications précédentes, **caractérisé en ce que** le dispositif comprend des moyens pour utiliser de l'eau glacée comme agent de réfrigération.

7. Dispositif (1) selon l'une quelconque des revendications précédentes, **caractérisé en ce que** le dispositif comprend un régulateur de vide pour réguler le vide dans la cuve pour collecte du lait (4, 36, 37).

8. Dispositif (1) selon l'une quelconque des revendications précédentes, **caractérisé en ce que** la paroi (51) de la cuve pour collecte du lait (4, 36, 37) comprend la surface réfrigérante (9).

9. Dispositif (1) selon l'une quelconque des revendications précédentes, **caractérisé en ce que** l'admission pour le lait (7) est disposée sur le côté supérieur de la cuve pour collecte du lait (4, 36, 37).

10. Dispositif (1) selon l'une quelconque des revendications précédentes, **caractérisé en ce que** la cuve pour collecte du lait (4, 36) comprend une surface de dispersion (29) pour disperser le lait à acheminer vers la cuve pour collecte du lait (4, 36).

11. Dispositif (1) selon la revendication 10, **caractérisé en ce que** l'admission pour le lait (7), vue dans la direction de la force de gravité, est située au-dessus de la surface de dispersion (29).

12. Dispositif (1) selon la revendication 10 ou 11, **caractérisé en ce que** la surface de dispersion (29) forme un angle entre 10° et 80° par rapport à la direction de la force de gravité.

13. Dispositif (1) selon l'une quelconque des revendications 10 à 12, **caractérisé en ce que** la surface réfrigérante (9) comprend au moins partiellement la surface de dispersion (29).

14. Dispositif (1) selon l'une quelconque des revendications 1 à 7, **caractérisé en ce que** la paroi (51) de la cuve pour collecte du lait (4, 36, 37) entoure au moins partiellement la surface réfrigérante (9).

15. Dispositif (1) selon l'une quelconque des revendications précédentes, **caractérisé en ce que** le dispositif de réfrigération de la cuve (8) comprend un réfrigérant à serpentins (42).

16. Dispositif (1) selon l'une quelconque des revendications précédentes, **caractérisé en ce que** le dispositif de réfrigération de la cuve (8) comprend un réfrigérant à plaques.

17. Dispositif (1) selon les revendications 16 et 4, **caractérisé en ce que** le dispositif de réfrigération (25) du dispositif de raccordement est raccordé à l'évacuation (50) pour l'agent de réfrigération.

18. Dispositif (1) selon l'une quelconque des revendications précédentes, **caractérisé en ce que** la cuve pour collecte du lait (4, 36, 37) est entourée par une couche thermo-isolante (40).

19. Dispositif (1) selon l'une quelconque des revendications précédentes, **caractérisé en ce que** le dispositif (1) est doté de moyens pour vider automatiquement la cuve pour collecte du lait (4, 36, 37) une fois qu'un animal laitier a été trait, de telle sorte que la cuve pour collecte du lait (4, 36, 37) soit adaptée pour contenir une quantité de lait obtenue seulement lors d'un cycle de traite de l'animal laitier.

20. Dispositif (1) selon l'une quelconque des revendications précédentes, **caractérisé en ce que** le dispositif (1) comprend un ordinateur de contrôle (16) pour émettre un signal de destination, et **en ce que** l'évacuation pour le lait (6) peut être contrôlée par le signal de destination et est adaptée pour guider sélectivement le lait vers plusieurs destinations.

21. Dispositif (1) selon l'une quelconque des revendications précédentes, **caractérisé en ce que** la cuve pour collecte du lait (4, 36, 37) comprend un volumètre.

22. Dispositif (1) selon l'une quelconque des revendications précédentes, **caractérisé en ce que** la cuve pour collecte du lait (4, 36, 37) comprend un dispositif d'agitation (38, 45) pour agiter le lait.
